# EUROPEAN PATENT APPLICATION

(11) **EP 4 752 660 A1**
(43) Date of publication of application: **03.06.2026**
(21) Application number: 25218653.1
(22) Date of filing: 26.11.2025
(51) Int. Cl.: G05D 1/222, G05D 1/242, G05D 1/617, G05D 105/00, G05D 107/30, G05D 109/10, G05D 111/10, B60K 35/22, B60K 35/28, B60K 35/10

(54) **CRAWLER VEHICLE AND CONTROL METHOD TO CONTROL SAID CRAWLER VEHICLE**

(30) Priority: 29.11.2024 IT 202400027078; 18.12.2024 IT 202400028929
(71) Applicant: PRINOTH S.p.A., 39049 Vipiteno (BZ) (IT)
(72) Inventor: SALIS, Francesco, 39049 VIPITENO (BZ) (IT); BONTEMPELLI, Elia, 39049 VIPITENO (BZ) (IT); PAOLETTI, Alberto, 39049 VIPITENO (BZ) (IT); KIRCHMAIR, Martin, 39049 VIPITENO (BZ) (IT); RAUTSCHER, Georg, 39049 VIPITENO (BZ) (IT)
(74) Representative: Studio Torta S.p.A.

(57) **Abstract**

A crawler vehicle has a frame (2); a pair of motorised tracks (3); a detection device (4, 5) configured to detect data indicative of an environment surrounding the crawler vehicle (1); and a control system (6), which comprises a processing module (17) configured to process the data detected by the detection device (4, 5) and to identify a position and/or a conformation of reference elements in the environment surrounding the crawler vehicle (1) as a function of said processed data, the control system (6) being configured to perform at least one of the following actions: send to an interface screen (15) information indicative of the identified position and/or the identified conformation of the reference elements; control the advancement of the crawler vehicle (1) in the surrounding environment as a function of the identified position and/or the identified conformation of the reference elements.

## Description

### CROSS-REFERENCE TO RELATED APPLICATIONS

This patent application claims priority from Italian patent applications no. 102024000027078 filed on November 29, 2024, and no. 102024000028929 filed on December 18, 2024, the entire disclosure of which is incorporated herein by reference.

### TECHNICAL SECTOR

The present invention relates to a crawler vehicle, preferably used for preparing ski runs, and a control method to control said crawler vehicle.

### BACKGROUND OF THE INVENTION

Generally, a crawler type vehicle comprises a frame, a driver's cab, a propulsion system, a pair of motorised tracks, and possibly working tools.

As is well known, the crawler vehicles are commonly used to advance along off-road routes for the purpose of transporting goods or people or to carry out a wide range of different jobs, such as preparing the snowpack of ski runs or cleaning beaches, or for agricultural operations.

However, given the complexity of the currently known crawler vehicles, driving a crawler vehicle is in itself a very difficult and delicate task that must be entrusted to experienced drivers. Moreover, in the environments in which the crawler vehicles operate, any adverse weather conditions and/or the unpredictability of the conformation of the off-road routes make the driving operations of the crawler vehicle even more complex.

### OBJECT OF THE INVENTION

An aim of the present invention is to realize a crawler vehicle that mitigates the drawbacks of the prior art disclosed herein.

In accordance with the present invention, a crawler vehicle is realized, preferably for preparing ski runs, the crawler vehicle being configured to advance in an operational environment and comprising:
- a frame;
- a pair of motorised tracks;
- a detection device configured to detect data indicative of an environment surrounding the crawler vehicle; and
- a control system, which is in communication with the detection device and comprises a processing module configured to process the data detected by the detection device and to identify a position and/or a conformation of reference elements in the environment surrounding the crawler vehicle as a function of said processed data;
the control system being configured to perform at least one of the following actions:
- sending to an interface screen information indicative of the identified position and/or the identified conformation of the reference elements so as to allow a display of said information on the interface screen;
- sending to a remote monitoring system information indicative of the identified position and/or the identified conformation of the reference elements;
- controlling the advancement of the crawler vehicle in the surrounding environment as a function of the identified position and/or the identified conformation of the reference elements;
- interrupting the advancement of the crawler vehicle in the surrounding environment as a function of the identified position and/or the identified conformation of the reference elements.

Thanks to the present invention, it is possible to autonomously control the advancement of the crawler vehicle in the operational environment or at least assist a driver of the crawler vehicle in driving.

In the event that the control system autonomously controls the advancement of the crawler vehicle, thanks to the detection of the position and conformation of the reference elements, it is possible to avoid any obstacles along the path of the crawler vehicle.

In addition or alternatively, thanks to the display of the information on the reference elements, it is possible to simplify the driving operations of the crawler vehicle so as to allow the crawler vehicle to be driven even by a driver with little experience.

In addition, it is possible to control the advancement of the crawler vehicle even remotely, without the need to keep the driver aboard the crawler vehicle.

A further aim of the present invention is to realize a control method to control a crawler vehicle that mitigates the drawbacks of the prior art disclosed herein.

In accordance with the present invention a control method to control a crawler vehicle is realized, the control method comprising the steps of:
- detecting data indicative of an environment surrounding the crawler vehicle;
- processing the detected data and identifying a position and/or a conformation of reference elements in the environment surrounding the crawler vehicle as a function of the processed data; and
- performing at least one of the following actions:
   - sending to an interface screen information indicative of the identified position and/or the identified conformation of the reference elements so as to allow a display of said information on the interface screen;
   - sending to a remote monitoring system information indicative of the identified position and/or the identified conformation of the reference elements;
   - controlling the advancement of the crawler vehicle in the surrounding environment as a function of the identified position and/or the identified conformation of the reference elements;
   - interrupting the advancement of the crawler vehicle in the surrounding environment as a function of the identified position and/or the identified conformation of the reference elements.

Thanks to this method, it is possible to automatically identify the position and conformation of reference elements, such as obstacles or edges of a path, in order to define an area that can be travelled by the crawler vehicle. In this way, the control system can autonomously control the advancement of the crawler vehicle in the area that can be travelled or can assist a driver of the crawler vehicle in driving.

### BRIEF DESCRIPTION OF THE DRAWINGS

Further characteristics and advantages of the present invention are defined in the dependent claims and will become clear from the following description of non-limiting examples of embodiment thereof, with reference to the figures of the attached drawings, wherein:
- Figure 1 is a view in side elevation, with parts removed for clarity and schematised parts, of a crawler vehicle made in accordance with the present invention;
- Figure 2 is a block diagram of a detail of the crawler vehicle of Figure 1;
- Figure 3 is a flowchart of a method to control the crawler vehicle of Figure 1; and
- Figures 4 and 5 are respective examples of processed digital images of a control system of the crawler vehicle of Figure 1.

### DETAILED DESCRIPTION OF THE FIGURES

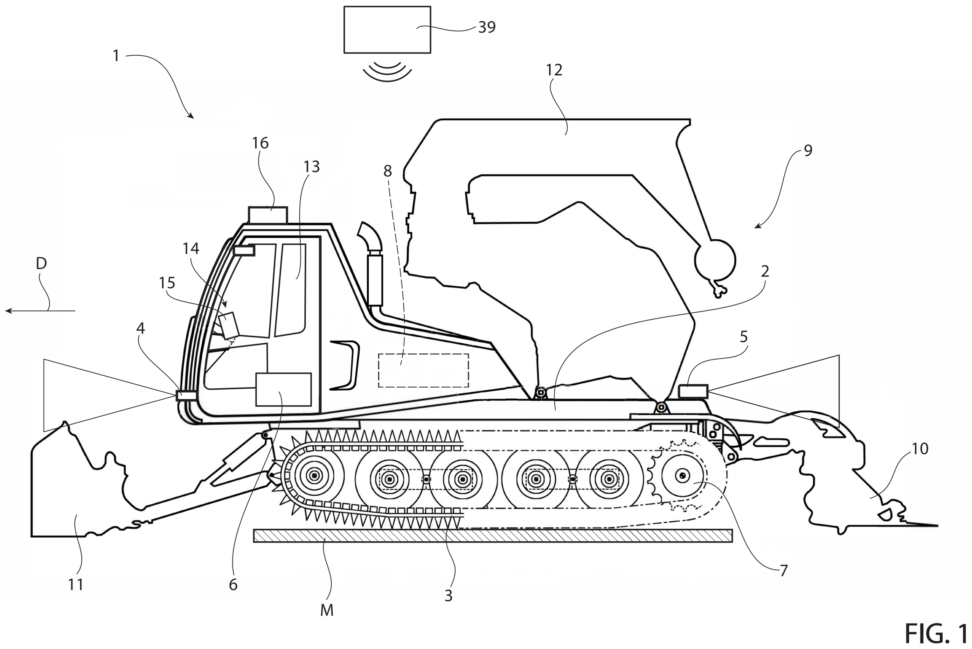

With reference to figure 1, 1 denotes as a whole a crawler vehicle, which in the case shown is used for preparing a snowpack M of ski runs. In particular, the crawler vehicle 1 is a snow groomer.

In more detail, the crawler vehicle 1 is used for preparing downhill ski runs, and/or cross-country ski runs, and/or ski-jumping ramps, and/or half-pipe ski runs, and/or snow-parks, and/or snowmobile tracks.

In accordance with a further embodiment, the crawler vehicle 1 can be used for the maintenance of sandy areas, such as beaches, or for agricultural operations, such as harvesting and/or handling of agricultural products and/or forage silage and/or bagasse harvesting and/or handling.

In addition, in accordance with a further embodiment not shown in the accompanying figures, the crawler vehicle 1 can comprise a shredder preferably positioned at the front of the crawler vehicle 1 and can be used for shredding vegetation.

In accordance with the present invention, the crawler vehicle 1 is configured to advance in an operational environment in a travelling direction D and comprises a frame 2; a pair of motorised tracks 3 (only one of which is visible in Figure 1); a detection device 4, 5 configured to detect data indicative of an environment surrounding the crawler vehicle 1; and a control system 6 in communication with the detection device 4, 5.

In particular, the control system 6 is provided with wireless connection capability, for example directly through a local communication network or through a mobile data network and an Internet connection, for connection to a remote monitoring system 39 of a ski resort. In more detail, the remote monitoring system 39 is configured to receive data from the control unit 6, to process said received data, and to monitor and/or control a fleet of crawler vehicles 1 as a function of the processed data. In accordance with an embodiment, the remote monitoring system 39 implements artificial intelligence algorithms.

In addition, the crawler vehicle 1 comprises a pair of drive wheels 7 (only one of which is visible in Figure 1), each of which is coupled to a respective track 3; a propulsion system 8, for example internal combustion or electric or hydrogen-powered, configured to transmit power to the drive wheels 7; and a working tool assembly 9 connected to the frame 2.

In the non-limiting embodiment of the present invention described and shown herein, the working tool assembly 9 comprises a tiller 10, a shovel 11, and a winch 12. It is understood that the crawler vehicle 1 does not necessarily include all the working tools 9 mentioned above. For example, the crawler vehicle 1 may comprise any one or two of the working tools 9 selected from the tiller 10, the shovel 11 and the winch 12.

In the non-limiting embodiment of the present invention described and shown herein, the crawler vehicle 1 comprises a cab 13 mounted on the frame 2 and a user interface 14, which is arranged in the cab 13 and is provided with an interface screen 15. In accordance with an embodiment not shown in the accompanying figures, the user interface 14 comprises a plurality of interface screens 15.

In accordance with an alternative embodiment, not shown in the accompanying figures, the crawler vehicle 1 is without a cab and the user interface 14 is arranged at a remote location.

In particular, each detection device 4, 5 comprises a lidar and/or a radar and/or an infrared video camera and/or a stereoscopic camera and/or a camera and/or a video camera preferably at 270° or 360°. By way of example, in the event that the detection device 4, 5 comprises a camera or a video camera, said detection device 4, 5 is configured to respectively detect images or videos of the environment surrounding the crawler vehicle 1.

In accordance with a variant of the present invention, each detection device 4, 5 comprises a thermographic camera configured to acquire thermographic images and/or thermographic videos of the environment surrounding the crawler vehicle 1.

In one embodiment, each detection device 4, 5 comprising a thermographic camera allows one or more of the following to be detected: snow temperature(s); snow humidity; air temperature(s); air humidity; snowpack profile M thanks to the temperature difference between snowpack M and air; distinguishing a worked surface of snowpack M from an unworked surface of snowpack M. The use of the thermographic camera is particularly useful in conditions of poor visibility, such as at night or in foggy conditions.

In more detail, the detection device 4 is arranged in a front portion of the crawler vehicle 1, is facing in the travelling direction D, and is configured to detect data indicative of the environment surrounding the crawler vehicle 1 in the travelling direction D.

The detection device 5 is arranged in a rear portion of the crawler vehicle 1, is facing in a direction substantially opposite to the traveling direction D, and is configured to detect data indicative of the environment surrounding the crawler vehicle 1 from the rear portion of the crawler vehicle 1.

In the non-limiting embodiment of the present invention described and shown herein, the acquisition device 5 is mounted on a rear portion of the crawler vehicle 1, in a retracted position with respect to the direction of travel and/or the drive wheels 7 and/or the winch 12, and is configured to acquire videos and/or images of a portion of the snowpack M, preferably already processed, to the rear of the tiller 10.

In accordance with a variant of the present invention, not shown in the accompanying figures, the acquisition device 5 is attached to the tiller 10.

In accordance with further embodiments of the present invention, not shown in the accompanying Figures, each detection device 4, 5 can be mounted on the shovel 11 or on the winch 12 or along a ski run or on an aerial vehicle, preferably unmanned, such as for example an aerial drone.

In addition, the crawler vehicle 1 may comprise further detection devices (not shown in the accompanying figures) arranged, for example, along lateral portions of the crawler vehicle 1 to detect data indicative of the environment surrounding the crawler vehicle 1 in directions transverse to the travelling direction D.

In addition, the crawler vehicle 1 comprises a sensor assembly 16 which is in communication with the control system 6 and is configured to detect operative information comprising operational parameters of the crawler vehicle 1 and/or information about the operations to be performed and/or about the characteristics of the environment surrounding the crawler vehicle 1.

In particular, the sensor assembly 16 comprises a satellite navigation device, for example a GNSS ("Global Navigation Satellite System") type device, which is configured to detect the position and the three-dimensional orientation of the crawler vehicle 1.

In accordance with embodiments not shown in the accompanying figures, the sensor assembly 16 can be arranged aboard further crawler vehicles or aboard an aerial vehicle, preferably unmanned, such as an aerial drone.

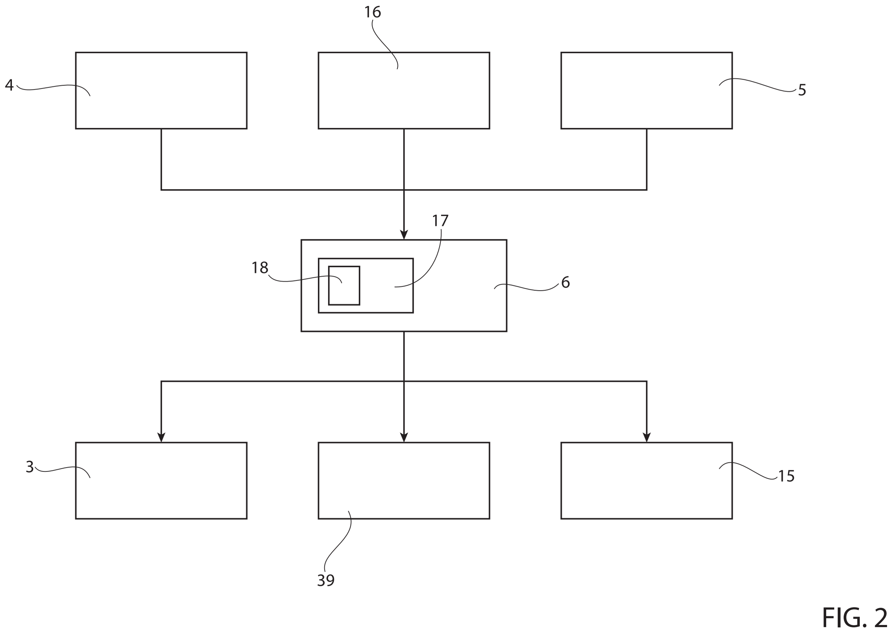

With reference to Figure 2, the control system 6 comprises a processing module 17 configured to process the data detected by the detection device 4, 5 and to identify a position and/or a conformation of reference elements in the environment surrounding the crawler vehicle 1 as a function of said processed data.

In particular, the processing module 17 is configured to identify a position of objects and/or living beings in the environment surrounding the crawler vehicle 1 as a function of said processed data and/or to determine a conformation of the environment surrounding the crawler vehicle 1 as a function of said processed data.

Furthermore, the control system 6 is configured to receive from the sensor assembly 16 operative information comprising operational parameters of the crawler vehicle 1 and/or information about the operations to be performed and/or about the characteristics of the environment surrounding the crawler vehicle 1. The processing module 17 is configured to process said information received from the sensor assembly 16 and to identify the position and/or conformation of the reference elements in the environment surrounding the crawler vehicle 1 also as a function of said information.

The control system 6 is configured to perform at least one of the following actions: sending to the interface screen 15 information indicative of the identified position and/or the identified conformation of the reference elements so as to allow a display of said information on the interface screen 15; sending to the remote monitoring system 39 information indicative of the identified position and/or the identified conformation of the reference elements; controlling the advancement of the crawler vehicle 1 in the surrounding environment as a function of the identified position and/or the identified conformation of the reference elements; interrupting the advancement of the crawler vehicle 1 in the surrounding environment as a function of the identified position and/or the identified conformation of the reference elements.

In particular, the control system 6 is configured to independently control the tracks 3 so as to advance the crawler vehicle 1 as a function of the identified position and/or the identified conformation of the reference elements. In more detail, the control system 6 is configured to control the propulsion system 8 so as to operate the tracks 3 as a function of the identified position and/or the identified conformation of the reference elements.

In the case described and shown herein, the processing module 17 comprises a memory 18 in which a database containing comparison images of a plurality of reference elements of different types is stored. The processing module 17 is configured to classify each reference element as a function of the processed data and the comparison images stored in the database.

By way of example, the processing module 17 is configured to classify each reference element as an obstacle or as a boundary element delimiting an area that can be travelled by the crawler vehicle 1 or as a component of the crawler vehicle, for example the tiller 10 or the shovel 11 or the winch 12.

In more detail, the processing module 17 comprises artificial intelligence algorithms, which preferably employ pre-trained convolutional neural networks for the detection and classification of the reference elements. In accordance with a non-limiting embodiment of the present invention, said artificial intelligence algorithms comprise object detection models, such as the "YOLO - (You Only Look Once)" model.

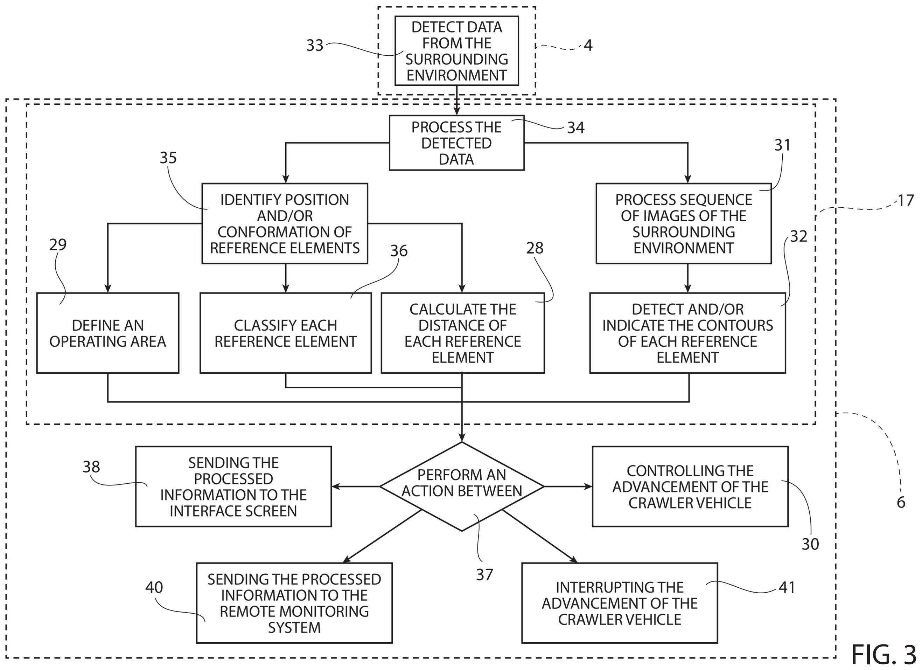

With reference to Figure 3, the processing module 17 is configured to calculate a distance of each identified reference element from the crawler vehicle 1 as a function of the processed data (block 28).

By way of example, the processing module 17 implements a "Monocular Depth Estimation" algorithm, which is configured to estimate the distance of reference elements by receiving images and/or videos detected by a single camera as input.

In addition, the processing module 17 is configured to define an area that can be travelled by the crawler vehicle 1 as a function of the identified position and/or the identified conformation of the reference elements (block 29) and to plan an optimal advancement path within the area that can be travelled by the crawler vehicle 1, so as to avoid collisions with any reference elements classified as obstacles.

In particular, the control system 6 is configured to control the motorised tracks 3 so as to advance the crawler vehicle 1 in the defined operating area, along the planned optimal travel path (block 30).

Furthermore, the processing module 17 is configured to process in real time a sequence of digital images of the environment surrounding the crawler vehicle 1 as a function of the data detected by the detection device 4, 5 (block 31).

In particular, the processing module 17 is configured to detect and/or indicate contours of each reference element in the sequence of processed digital images (block 32).

In more detail, the artificial intelligence algorithms implemented by the processing module 17 comprise deep learning models, such as a "Semantic Segmentation" model, which associate a category with each unitary element, preferably each pixel, of the digital image processed in order to group similar unitary elements in the same category.

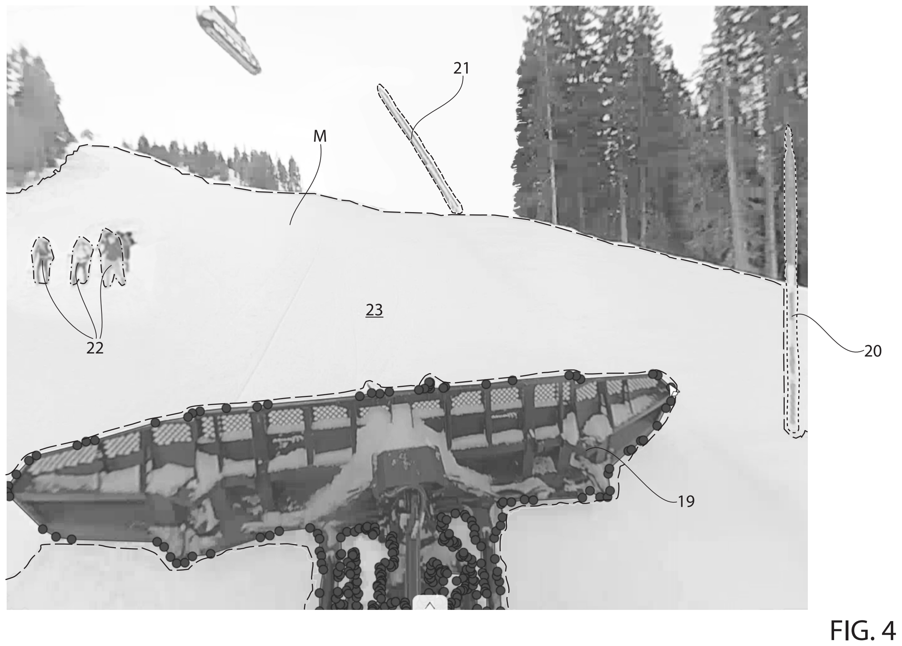

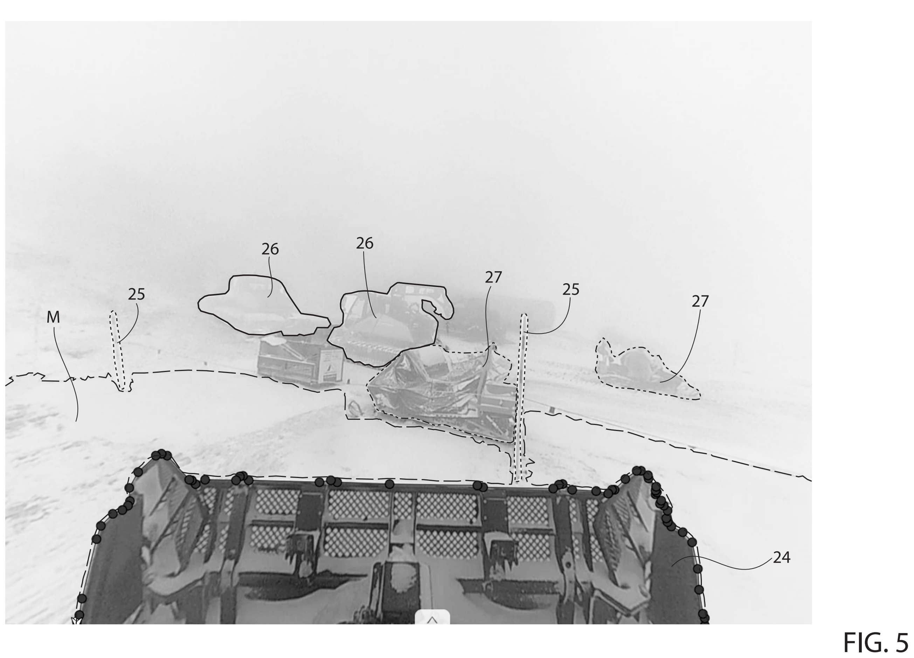

With reference to Figures 4 and 5, respective examples of digital images processed by the processing module 17 are shown.

With reference to Figure 4, the reference module 17 processes the digital image of the environment surrounding the crawler vehicle 1 and detects and identifies the contours of each reference element 19, 20, 21, 22 and the area occupied by each reference element 19, 20, 21, 22. In particular, the processing module 17, by employing the comparison images stored in the memory 18 (Figure 2) and implementing artificial intelligence algorithms, classifies the reference element 19 as a shovel of the crawler vehicle 1, the reference element 20 as a pole, the reference element 21 as a snow lance, and the reference elements 22 as people.

Furthermore, the processing module 17 defines the area that can be travelled 23 by the crawler vehicle 1 as a portion of snowpack M in which the areas occupied by the reference elements 20, 21, 22 are excluded.

With reference to Figure 5, the reference module 17 processes the digital image of the environment surrounding the crawler vehicle 1 and detects and identifies the contours of each reference element 24, 25, 26, 27 and the area occupied by each reference element 24, 25, 26, 27. In particular, the processing module 17 classifies the reference element 24 as a shovel of the crawler vehicle 1, the reference elements 25 as poles, the reference elements 26 as crawler vehicles, and the reference elements 27 as snowmobiles.

In use and with reference to Figure 3, the detection devices 4 and 5 detect data indicative of the environment surrounding the crawler vehicle 1 (block 33) and transmit said detected data to the control system 6.

The control system 6 receives the data detected by the detection devices 4, 5 and the processing module 17 processes said received data in real time (block 34).

In particular, the processing module 17 processes in real time a sequence of digital images of the environment surrounding the crawler vehicle 1 as a function of the data detected by the detection device 4, 5 (block 31).

In more detail, the processing module 17 detects and/or indicates the contours of each reference element in the sequence of digital images processed by implementing intelligence algorithms including deep learning models (block 32).

In addition or alternatively, the processing module 17 identifies a position and/or a conformation of the reference elements in the environment surrounding the crawler vehicle 1 as a function of said processed data (block 35).

In more detail, the processing module 17 classifies each reference element as a function of the processed data and comparison images stored in the database and by implementing artificial intelligence algorithms (block 36).

Furthermore, the processing module 17 calculates a distance of each reference element identified by the crawler vehicle 1 as a function of the identified position of the reference elements (block 28) and/or, in accordance with a variant of the present invention not shown in the accompanying figures, as a function of the sequence of processed images of the surrounding environment.

In addition, the processing module 17 defines an area that can be travelled by the crawler vehicle 1 as a function of the identified position and/or the identified conformation of the reference elements (block 29) and/or, in accordance with a variant of the present invention not shown in the accompanying figures, as a function of the detected contours of each reference element.

In accordance with one form of implementation, the processing module 17 autonomously plans an optimal advancement path for the crawler vehicle 1 within the defined operating area so as to avoid collisions with any reference elements classified as obstacles.

At this point, the control system 6 performs at least one of the following actions (block 37):
- sends to the interface screen 15 information indicative of the identified position and/or the identified conformation of the reference elements, such as the processed digital images and/or video in real time and/or a schematic representation through icons, so as to allow a display of said information on the interface screen 15 (block 38), and/or audible alarms for reference elements at a distance less than a predefined distance;
- sends to the remote monitoring system 39 information indicative of the identified position and/or the identified conformation of the reference elements (block 40);
- controls the advancement of the crawler vehicle 1 in the surrounding environment as a function of the identified position and/or identified conformation of the reference elements identified (block 30);
- interrupts the advancement of the crawler vehicle 1 in the surrounding environment as a function of the identified position and/or the identified conformation of the reference elements (block 41).

In particular, depending on the actions performed by the control system 6, the crawler vehicle 1 can be used in one or more of the following operating modes: a first fully autonomous operating mode, in which the control system 6 plans the optimal advancement path and controls the crawler vehicle 1 so that it follows said optimal advancement path; and a second partially assisted operating mode, in which the advancement of the crawler vehicle 1 is controlled by a driver assisted by the information indicative of the position and/or conformation of the reference elements displayed on the interface screen 15.

It is evident that variants can be made to the present invention without, however, departing from the scope of protection of the appended claims.

## Claims

1. A crawler vehicle, preferably for preparing ski runs, the crawler vehicle (1) being configured to advance in an operational environment and comprising:
- a frame (2);
- a pair of motorised tracks (3);
- a detection device (4, 5) configured to detect data indicative of an environment surrounding the crawler vehicle (1); and
- a control system (6), which is in communication with the detection device (4, 5) and comprises a processing module (17) configured to process the data detected by the detection device (4, 5) and to identify a position and/or a conformation of reference elements in the environment surrounding the crawler vehicle (1) as a function of said processed data;
the control system (6) being configured to perform at least one of the following actions:
- sending to an interface screen (15) information indicative of the identified position and/or the identified conformation of the reference elements so as to allow a display of said information on the interface screen (15);
- sending to a remote monitoring system (39) information indicative of the identified position and/or the identified conformation of the reference elements;
- controlling the advancement of the crawler vehicle (1) in the surrounding environment as a function of the identified position and/or the identified conformation of the reference elements;
- interrupting the advancement of the crawler vehicle (1) in the surrounding environment as a function of the identified position and/or the identified conformation of the reference elements.

2. The crawler vehicle as claimed in claim 1, wherein the detection device (4, 5) comprises a lidar and/or a radar and/or an infrared camera and/or a stereo camera and/or a camera and/or a video camera.

3. The crawler vehicle as claimed in claim 1 or 2, wherein the detection device (4, 5) is facing in a travelling direction (D) of the crawler vehicle (1) and is configured to detect data indicative of the environment surrounding the crawler vehicle (1) in the travelling direction (D).

4. The crawler vehicle as claimed in any one of the foregoing claims, wherein the detection device (4, 5) is facing in a direction substantially opposite to the travelling direction (D) and is configured to detect data indicative of the environment surrounding the crawler vehicle (1) in the direction substantially opposite to the travelling direction (D).

5. The crawler vehicle as claimed in any one of the foregoing claims, wherein the processing module (17) is configured to identify a position of objects and/or living beings in the environment surrounding the crawler vehicle (1) as a function of said processed data and/or to determine a conformation of the environment surrounding the crawler vehicle (1) as a function of said processed data.

6. The crawler vehicle as claimed in any one of the foregoing claims, wherein the processing module (17) is configured to process in real time a sequence of digital images of the environment surrounding the crawler vehicle (1) as a function of the data detected by the detection device (4, 5).

7. The crawler vehicle as claimed in claim 6, wherein the processing module (17) is configured to detect and/or indicate contours of each reference element in the sequence of processed digital images.

8. The crawler vehicle as claimed in any one of the foregoing claims, wherein the processing module (17) comprises a memory (18) in which a database containing comparison images of a plurality of reference elements of different types is stored; the processing module (17) being configured to classify each reference element as a function of the processed data and of the comparison images stored in the database.

9. The crawler vehicle as claimed in any one of the preceding claims, wherein the processing module (17) is configured to calculate a distance of each identified reference element from the crawler vehicle (1) as a function of the processed data.

10. The crawler vehicle as claimed in any one of the foregoing claims, wherein the processing module (17) is configured to define an operating area that can be travelled by the crawler vehicle (1) as a function of the identified position and/or the identified conformation of the reference elements, and preferably to plan an optimal advancement path within such operating area for the crawler vehicle (1).

11. The crawler vehicle as claimed in claim 10, wherein the control system (6) is configured to control the motorised tracks (3) so as to advance the crawler vehicle (1) within the defined operating area, preferably along the planned optimal advancement path.

12. The crawler vehicle as claimed in any one of the foregoing claims, wherein the processing module (17) comprises artificial intelligence algorithms.

13. The crawler vehicle as claimed in any one of the foregoing claims, and comprising a cab (13) mounted on the frame (2) and a user interface (14), which is arranged in the cab (13) and is provided with an interface screen (15) configured to receive and display information indicative of the identified position and/or the identified conformation of the reference elements.

14. A control method for controlling a crawler vehicle, the control method comprising the steps of:
- detecting data indicative of an environment surrounding the crawler vehicle (1);
- processing the detected data and identifying a position and/or a configuration of reference elements in the environment surrounding the crawler vehicle (1) as a function of the processed data; and
- performing at least one of the following actions:
- sending to an interface screen (15) information indicative of the identified position and/or the identified conformation of the reference elements so as to allow a display of said information on the interface screen (15);
- sending to a remote monitoring system (39) information indicative of the identified position and/or the identified conformation of the reference elements;
- controlling the advancement of the crawler vehicle (1) in the surrounding environment as a function of the identified position and/or the identified conformation of the reference elements;
- interrupting the advancement of the crawler vehicle (1) in the surrounding environment as a function of the identified position and/or the identified conformation of the reference elements.

15. The control method as claimed in claim 14, and comprising the steps of processing in real time a sequence of digital images of the environment surrounding the crawler vehicle (1) as a function of said detected data; and preferably detecting and/or indicating contours of each reference element in the processed sequence of digital images.

16. The control method as claimed in claim 14 or 15, and comprising the steps of storing a database containing comparison images of a plurality of reference elements of different types; and classifying each reference element as a function of the processed data and the comparison images stored in the database.

17. The control method as claimed in any one of claims 14 to 16, and comprising the step of calculating a distance of each identified reference element from the crawler vehicle (1) as a function of the processed data.

18. The control method as claimed in any one of claims 14 to 17, and comprising the step of defining an operating area that can be travelled by the crawler vehicle (1) as a function of the identified position and/or the identified conformation of the reference elements.

19. A computer program configured to control a crawler vehicle (1) and directly loadable into a memory (18) of the control system (6) to carry out the steps of the method of any one of claims 14 to 18 when the program is implemented by the control system (6).

20. A program product comprising a readable medium on which the program of claim 19 is stored.
